(19) Europäisches Patentamt

European Patent Office

Office européen des brevets

(11) **EP 1 028 037 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
***B60R 21/16*** *(2006.01)* ***B60R 21/01*** *(2006.01)*

(21) Anmeldenummer: **00101688.0**

(22) Anmeldetag: **03.02.2000**

(54) **Verfahren zur Auslösung einer Sicherheitseinrichtung in einem Kraftfahrzeug im Falle eines Überschlages**

Method for activating a safety system in a vehicle in case of a roll-over

Méthode de déclenchement d'un système de sécurité pour véhicule en cas de retournement

(84) Benannte Vertragsstaaten:
**DE ES FR GB IT SE**

(30) Priorität: **09.02.1999 DE 19905193**

(43) Veröffentlichungstag der Anmeldung:
**16.08.2000 Patentblatt 2000/33**

(73) Patentinhaber: **Conti Temic microelectronic GmbH**
**90411 Nürnberg (DE)**

(72) Erfinder:
• **Küblbeck, Hermann**
**86529 Schrobenhausen (DE)**
• **Larice, Markus**
**85123 Karlskron (DE)**
• **Steurer, Helmut**
**85302 Junkenhofen (DE)**

(56) Entgegenhaltungen:
**WO-A-97/49571**      **WO-A-98/29280**
**DE-C- 19 651 124**     **GB-A- 2 314 187**

**Beschreibung**

Die Erfindung betrifft ein Verfahren zur Auslösung wenigstens einer Sicherheitseinrichtung in einem Kraftfahrzeug im Falle eines Überschlages. Dabei kommen als Sicherheitseinrichtungen vornehmlich überschlagbügel, Airbags und Gurtstraffer in Frage.

Aus der EP 0 430 813 B1 ist ein Sicherheitssystem für Kraftfahrzeuge mit einer elektronischen Anordnung zur Steuerung wenigstens einer Sicherheitseinrichtung im Falle eines Überschlags des Kraftfahrzeugs bekannt. Das sicherheitssystem enthält ein Gyrometer (Drehraten- oder Gyrosensor), das die Drehgeschwindigkeit der wankbewegung mißt, und Beschleunigungsmesser in allen drei Raumachsen, wobei die elektronische Anordnung die vom Gyrometer und von den Beschleunigungssensoren stammenden Signale zur Steuerung der Auslösung der Sicherheitseinrichtung verarbeitet. Hierbei erfolgt die Auswertung der Sensorsignale des Gyrosensors mittels Integration der Drehgeschwindigkeit für eine bestimmte Zeitdauer, falls ein Initialereignis erkannt wird. Ein solches Initialereignis liegt dann vor, wenn die horizontale Beschleunigung eine bestimmte Schwelle oder das Verhältnis von Horizontal- zu Querbeschleunigung eine bestimmte Schwelle überschreitet. Damit wird ein Überlaufen der Integration vermieden und insbesondere der Neigungswinkel des Fahrzeuges bestimmt.

Als nachteilig dieses bekannten Sicherheitssystem ist die hierzu erforderliche hohe Anzahl von zusätzlichen Beschleunigungssensoren anzusehen, mit Hilfe derer die Inertialereignisse bestimmt werden, um anschließend die Integration auszuführen zu können. Insbesondere hat sich herausgestellt, daß bei sehr langsamen Überschlägen des Fahrzeuges eine Auslösung entweder zu spät, d.h. bei Winkeln oberhalb des statischen Kippwinkels des Fahrzeuges oder überhaupt nicht erfolgt.

Eine Auslösung bei diesem bekannten Sicherheitssystem erfolgt auch ausschließlich aufgrund der Sensorsignale des Gyrosensors, wenn diese Werte einen hohen Schwellwert überschreiten, also eine hohe Winkelgeschwindigkeit vorliegt. Jedoch können im praktischen Fahrbetrieb auch hohe Winkelgeschwindigkeiten auftreten, die wohl zu einer gewissen Neigung des Fahrzeugs führen, jedoch keinen Überschlag zur Folge haben. Bei dem bekannten Sicherheitssystem ist daher eine Fehlauslösung bei hohen Winkelgeschwindigkeiten nicht ausgeschlossen.

Des weiteren ist aus der gattungsbildenden WO 98/29280 ein Verfahren zur Auslösung einer Sicherheitseinrichtung in einem Kraftfahrzeug im Falle eines Überschlages bekannt, bei dem das von einem Gyrosensor abgegebene Signal sowohl integriert als auch differenziert wird. Eine Auslösung der Sicherheitseinrichtung erfolgt hierbei, wenn der Wert des Integrals eine erste Schwelle überschreitet oder aber wenn dies nicht der Fall ist und zusätzliche Bedingungen erfüllt sind. Zu diesen zusätzlichen Bedingungen zählen u.a. die Überprüfung, ob der Differentialwert eine zweite Schwelle übersteigt und der Integralwert eine weitere (dritte) Schwelle überschreitet.

Es ist deshalb Aufgabe der Erfindung, ein Verfahren zur Auslösung wenigstens einer Sicherheitseinrichtung in einem Kraftfahrzeug im Falle eines Überschlages anzugeben, bei dem bei hohen Winkelgeschwindigkeiten einer Wankbewegung des Kraftfahrzeuges die Wahrscheinlichkeit einer Fehlauslösung minimiert wird und gleichzeitig auch bei langsamen Überschlägen eine rechtzeitige Auslösung der Sicherheitseinrichtung erfolgt.

Diese Aufgabe wird durch das eingangs erwähnte Verfahren gemäß den Merkmalen des Anspruchs 1 gelöst.

Die Erfindung zeigt auf überraschend und einfache Weise, dass die Auswertung von einerseits durch eine Differentiation der Winkelgeschwindigkeit und andererseits durch eine Integration der Winkelgeschwindigkeit gewonnenen Größen - also eine Auslösung der Sicherheitseinrichtung über zwei unabhängige Kanäle - eine sichere Auslösung sowohl bei Überschlägen mit hohen Drehgeschwindigkeiten als auch bei relativ langsamen Überschlägen möglich ist.

Vorzugsweise wird die Bewertung des Differentialwertes $d\omega/dt$ bzw. des Wertes des Integrals $\int \omega dt$ mittels der ersten bzw. zweiten Bewertungsfunktion $f_1$ bzw. $f_2$ derart durchgeführt, dass der Wert $f_1(\omega)$ bzw. $f_2(\omega)$ der ersten bzw. zweiten Bewertungsfunktion $f_1$ bzw. $f_2$ für jeden Wert $\omega$ der Drehgeschwindigkeit mit dem zugehörigen Differentialwert $d\omega/dt$ bzw. zugehörigen Wert des Integrals $\int \omega dt$ verglichen wird, und die Sicherheitseinrichtung ausgelöst wird, falls der Wert $f_1(\omega)$, bzw. $f_2(\omega)$ der ersten bzw. zweiten Bewertungsfunktion $f_1$ bzw. $f_2$ von dem Differentialwert $d\omega/dt$ bzw. dem Wert des Integrals $\int \omega dt$ überschritten wird.

Bei einem vorteilhaften Ausführungsbeispiel wird die Differentiation durchgeführt, indem zunächst zur Erzeugung von Drehratendaten ($\omega_i$) in aufeinanderfolgenden, vorzugsweise äquidistanten Datenerfassungszeitpunkten $t_i$ die Sensorsignale $\omega$ des Drehratensensors abgetastet werden, was einer Digitalisierung zwecks nachfolgender digitaler Bearbeitung entspricht. Anschließend wird für jeweils aufeinanderfolgende Datenerfassungszeitpunkte $t_{i-1}$ und $t$, als Differentialwert $d\omega_i/dt_i$ der Differenzenqotient$(\omega_i - \omega_{i-1}) / (t_i - t_{i-1})$ gebildet.

Ein besonders bevorzugte Ausbildung des erfindungsgemäßen Verfahrens ergibt sich mit einer der mathematischen ähnlichen Differentiation, indem zunächst zur Bildung von Drehratendaten ($\omega_i$) in aufeinanderfolgenden, vorzugsweise äquidistanten Datenerfassungszeitpunkten ($t_i$) die Sensorsignale $\omega$ des Drehratensensors abgetastet werden (Verfahrensschritt a), mit wenigstens drei aufeinanderfolgenden Datenerfassungszeitpunkten wenigstens zwei aufeinanderfolgende disjunkte Zeitintervalle erzeugt werden (Verfahrensschritt b), aus den zu den drei aufeinanderfolgenden Datenerfassungszeitpunkten gehörenden Drehratenwerte die Differenzenquotienten $\Delta\omega_j$ gebildet werden (Verfahrensschritt c), und die Differenzenquotienten $\Delta\omega_j$ zur Bildung eines einem der genannten Drehratenwerte zuzuordnenden

Differentialwertes $\omega_k'$ aufsummiert werden (Verfahrensschritt d). Mit der Auswertung eines solchen Differentials wird eine außerordentliche hohe Bewertungssicherheit bei schnellen Überrollvorgängen erzielt, wobei gleichzeitig Fehlentscheidungen minimiert werden.

Vorzugsweise werden in einem aktuellen Datenerfassungszeitpunkt t, die verfahrensschritte b) bis d) durchgeführt, wobei dem erfaßten Wert $\omega_i$ der Drehrate der gemäß Verfahrensschritt d) berechnete Differentialwert $\omega_k'$ zugeordnet wird (Verfahrensschritt e), und in darauffolgenden Datenerfassungszeitpunkten $t_{i+1}, t_{i+2}, t_{i+3}, ....$) sukzessive Verfahrensschritt e) wiederholt wird. Somit wird mit jedem neuen Datenerfassungszeitpunkt ein neues Zeitintervall berechnet, das zusammen mit den zwei vorangehenden Zeitintervallen zur Berechnung des Differentials dienen, wobei lediglich der zu dem neu gebildeten Zeitintervall gehörende Differenzenquotient gebildet werden muß, um anschließend mit den schon vorliegenden Differenzenquotienten der vorangehenden Zeitintervalle aufsummiert zu werden. Damit wird in der gleichen Taktrate, die auch für die Digitalisierung verwendet wird, der Differentialwert erzeugt.

Zur Integration der Drehgeschwindigkeit $\omega$ werden bevorzugt die in den Datenerfassungszeitpunkten $t_i$ abgetasteten Drehratendaten ($\omega_i$) verwendet, indem diese in einfacher weise aufsummiert werden. Da die Integration über der Winkelgeschwindigkeit zu einer dem Neigungswinkel führenden Größe führt, jedoch die Integration fortlaufend erfolgt, wird vorgeschlagen, eine Rückführung des Integrals $\int \varphi dt_i$ mittels einer Rückführfunktion $R(\omega_i dt_i)$ durchzuführen, wobei vorzugsweise die Rückführung in Abhängigkeit der zeitlichen Konstanz des Wertes des Integrals ($\int \varphi dt_i$) erfolgt. Insbesondere ist es günstig, die Rückführung stufenweise zurückzuführen, da dies einfach, d. h. mit geringem Rechneraufwand erfolgen kann. Bei einem besonders bevorzugten Ausführungsbeispiel wird vorgeschlagen, in Zeitabschnitten $\Delta t$ um x % zurückzuführen, wobei $\Delta t$ in dem Bereich 1 bis 200 ms und x in dem Bereich 10 bis 20 liegt. Das rückgeführte Integral $\int \varphi dt_i$ entspricht damit im wesentlichen dem Neigungswinkels $\alpha$ des Kraftfahrzeuges.

Bei einem vorteilhaften Ausführungsbeispiel werden als erste und zweite Bewertungsfunktionen $f_1$ und $f_2$ Treppenfunktionen, vorzugsweise monoton fallend mit einer begrenzten Anzahl von Stufen verwendet. Damit wird die Winkelgeschwindigkeit $\omega$ mit dem zugehörigen Differentialwert bzw. dem zugehörigen Wert des Integrals verknüpft.

Als Bewertungsfunktionen können gleichfalls lineare Funktionen eingesetzt werden, wobei dann jedoch die erforderliche Rechnerleistung zur Berechnung der entsprechenden Größen mit nachteiliger Kostenfolge erheblich ansteigt.

Gemäß einem besonders bevorzugten Weiterbildung der Erfindung kann ein weiteres Auslösekriterium in Form einer weiterer Bewertungsfunktion sign neben der ersten bzw. zweiten Bewertungsfunktion angewendet werden, indem jeweils das Vorzeichen der Werte der Drehratendaten $\omega_i$ und das vorzeichen des zugehörigen Differentialwertes bzw. des zugehörigen integrals verglichen werden, und eine Auslösung der Sicherheitseinrichtung verhindert wird, wenn die Vorzeichen unterschiedlich sind. Damit wird bei einem Überschlag die Auslösung solange verzögert, bis die entsprechenden Größen gleiche Vorzeichen aufweisen. Es hat sich nämlich herausgestellt, daß unter allen Startbedingungen erfolgenden Überschläge spätestens nach einer gewissen Zeitdauer zu gleichen Vorzeichen der genannten Größen führen, wobei die verbleibende Zeitdauer bis zum Überschlag noch zur rechtzeitigen Auslösung unter Berücksichtigung der Auslösezeit beispielsweise eines Überrollbügels in der Regel ausreicht.

Bei einer besonders bevorzugten Ausführungsform der Erfindung werden zusätzlich zur Drehrate ein fahrzeugspezifischer Parameter, nämlich die vertikalbeschleunigung erfaßt und ausgewertet, indem die Werte $\omega_i$ der in den Datenerfassungszeitpunkten ($t_i$) erfaßten Beschleunigungsdaten ($\omega_i$) mit einer Stabilitätsschwelle $S(a_z)$ verglichen werden. Damit kann in Abhängigkeit der detektierten Vertikalbeschleunigung, die die dynamische Fahrlage des Fahrzeuges darstellt, eine noch bessere Differenzierung nach Fire-szenarien, d. h. Fahrzeugzustände, die zur Auslösung der Sicherheitseinrichtung führen soll, und No-fire-szenarien erzielt werden. Insbesondere kann der Wert der Stabilitätsschwelle an die der Auswertung zugrundeliegenden Größe angepaßt werden, also ob die durch Differentiation der Winkelgeschwindigkeit oder durch Integration erhaltene Größe verwendet wird. Bei der zweikanaligen Ausführung wird an jeden Kanal eine spezifische Anpassung vorgenommen.

Ausführungsbeispiele zur Durchführung des erfindungsgemäßen Verfahrens sind nachstehend ausführlich erläutert und anhand der Figuren dargestellt.

Es zeigen:

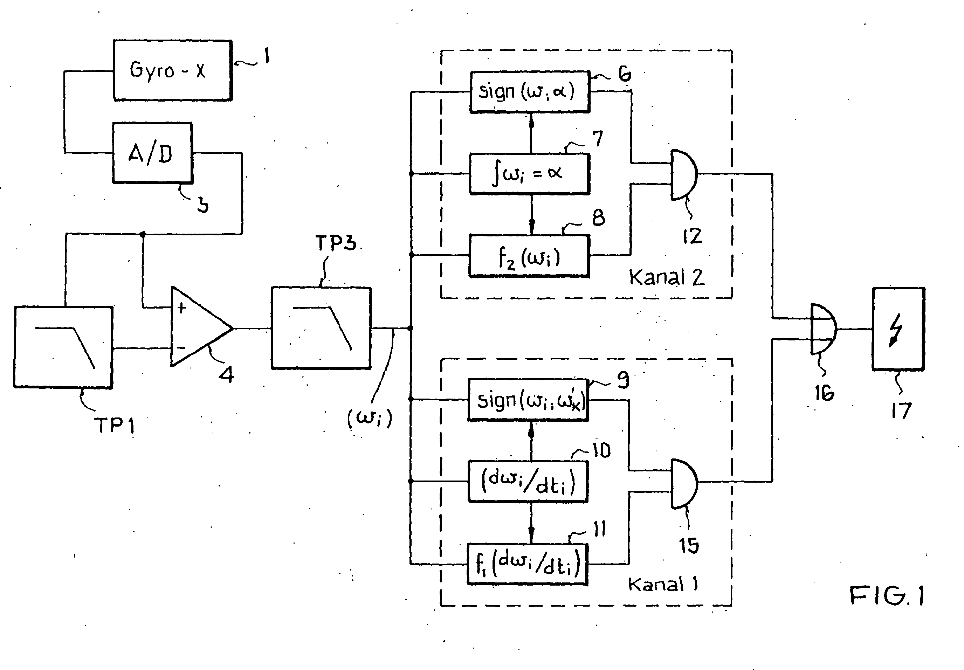

Fig. 1: Ein Blockschaltbild eines ersten Ausführungsbeispieles mit einem Drehratensensor und einem 2-kanaligen Auslösepfad,

Fig.: 2 ein die Bewertungsfunktion $f_1$ für Kanal 1 darstellendes $\omega$-$\omega'$- Diagramm,

Fig.: 3 ein die Bewertungsfunktion $f_2$ für Kanal 2 darstellendes $\omega$-$\alpha$- Diagramm,

Fig.: 4 ein Blockschaltbild eines weiteren Ausführungsbeispieles mit einem Drehratensensor und einem Beschleunigungssensor in z-Richtung,

Fig. 5:     ein die Bewertungsfunktion $f_1$ für Kanal 1 des Ausführungsbeispieles nach Figur 4 darstellendes ω-ω'- Diagramm,

Fig. 6:     eine Tabelle mit den ω-ω'- Schwellwertkombinationen der Bewertungsfunktion $f_1$ nach Figur 5 für Kanal 1,

Fig. 7:     eine Tabelle mit den Schwellwerten für die Beschleunigungswerte zur Prüfung der dynamischen Stabilität
            für Kanal 1 des Ausführungsbeispieles nach Figur 4,

Fig. 8:     eine detaillierte Teildarstellung des Blockschaltbildes nach Figur 4,

Fig. 9:     eine weitere detaillierte Teildarstellung des Blockschaltbildes nach Figur 4,

Fig. 10:    ein die Bewertungsfunktion $f_2$ für Kanal 2 des Ausführungsbeispieles nach Figur 4 darstellendes ω-α- Diagramm,

Fig. 11:    eine Tabelle mit den ω-α- Schwellwertkombinationen der Bewertungsfunktion $f_2$ für Kanal 2 des Ausführungsbeispieles nach Figur 4, und

Fig. 12:    eine Tabelle mit den Schwellwerten für die Beschleunigungswerte zur Prüfung der dynamischen Stabilität
            für Kanal 2 des Ausführungsbeispieles nach Figur 4.

In den Figuren sind gleiche Funktionsblöcke bzw. gleichwirkende Teile mit den gleichen Bezugszeichen versehen.

Die Figur 1 zeigt als erstes Ausführungsbeispiel des erfindungsgemäßen Verfahrens eine Anordnung, bestehend aus einem Drehraten- oder Gyrosensor 1, der ein zur Winkelgeschwindigkeit $ω_x$ (Drehrate) um die Längsachse
(X-Achse) eines Fahrzeuges proportionales Signal erzeugt, das zunächst einem A/D-Wandler 3 zwecks Digitalisierung
zugeführt wird, die mit einer Abtastfrequenz von 1 kHz durchgeführt wird, so daß in äqidistanten Datenerfassungszeitpunkten ($t_i$) die Drehratendaten ($ω_i$) vorliegen.

Da diese Drehratendaten ($ω_i$) nachfolgend - wie weiter unten erläutert wird - einer Integration unterzogen
werden, die zur näherungsweise Berechnung des Neigungswinkels α führt, muß aufgrund des Offsets und der Offset-
Drift, dessen Bereich bis zu 50 °/s nach beiden Seiten vom tatsächlichen Nullpunkt abweichen kann, vor der Integration
eine Offset-Kompensation durchgeführt werden, da ansonsten der wert der Integration fehlerhaft wird. Diese Kompensation wird mittels eines Tiefpassfilters TP1 1. Ordnung mit einer Grenzfrequenz von 10mHz durchgeführt, das als
digitales Filter ausgebildet ist.

Mit einem Komparator 4, dem sowohl das tiefpassgefilterte Signal als auch die Drehratendaten ($ω_i$) zugeführt
werden, erfolgt die Subtraktion des gefilterten Signals von den werten der Drehratendaten ($ω_i$), womit nicht nur die Fehler
des Offsets, sondern auch Fehler der Offset-Drift behoben werden.

Um den im Fahrbetrieb durch das Feder-Dämpfer-System und sonstigen Einflußgrößen verursachten Rauschanteil des Signals zu glätten, wird ein weiteres Tiefpassfilter TP3 1. Ordnung - das ebenfalls digital ausgebildet sein
kann - dem Komparator nachgeschaltet, das jedoch gegenüber dem Tiefpassfilter TP1 eine wesentliche höhere Grenzfrequeriz, vorzugsweise 11 Hz aufweist.

Erst nach dieser Glättung wird eine Auswertung hinsichtlich des vorliegens einer zu einem Überschlag führenden kritischen Fahrzeuglage ausgeführt.

Die Auswertung der Drehratendaten ($ω_i$) erfolgt nun über zwei Kanäle, nämlich Kanal 1 und Kanal 2. Die
Auswertung über Kanal 1 erfolgt dabei auf der Grundlage einer durch Differentiation der Drehratendaten ($ω_i$) gebildeten
Größe, während die Auswertung über Kanal 2 auf einer durch Integration der Drehratendaten ($ω_i$) gebildeten Größe ∫ φ
dt, beruht.

Gemäß Figur 1 wird in Kanal 1 mittels einer Differentiatoreinheit 10 eine im folgenden erläuterte Differentiation
durchgeführt, die der üblichen mathematischen Differentialrechnung entspricht. Auf der Grundlage der für die Digitalisierung verwendeten Abtastfrequenz von 1 kHz werden für die durch zwei benachbarten Datenerfassungszeitpunkten
$t_{i-1}$ und t, jeweils gebildeten Zeitintervalle der Differentialwert ($dω_i/dt_i$) folgendermaßen berechnet:

$$(dω_i/dt_i) = ((ω_i - ω_{i-1}) / (t_i - t_{i-1})).$$

Die dadurch erhaltene Folge von Differentialwerten wird im folgenden als Differential ($ω_i'$) bezeichnet.
Die werte dieses Differentials ($ω_i'$) werden sowohl einer vorzeichenbewertungseinheit 9 als auch einer Bewertungseinheit 11 zugeführt, die außerdem zwecks Zuführung der Drehratendaten ($\omega_i$) dem Tiefpassfilter TP3 nachgeschaltet sind.

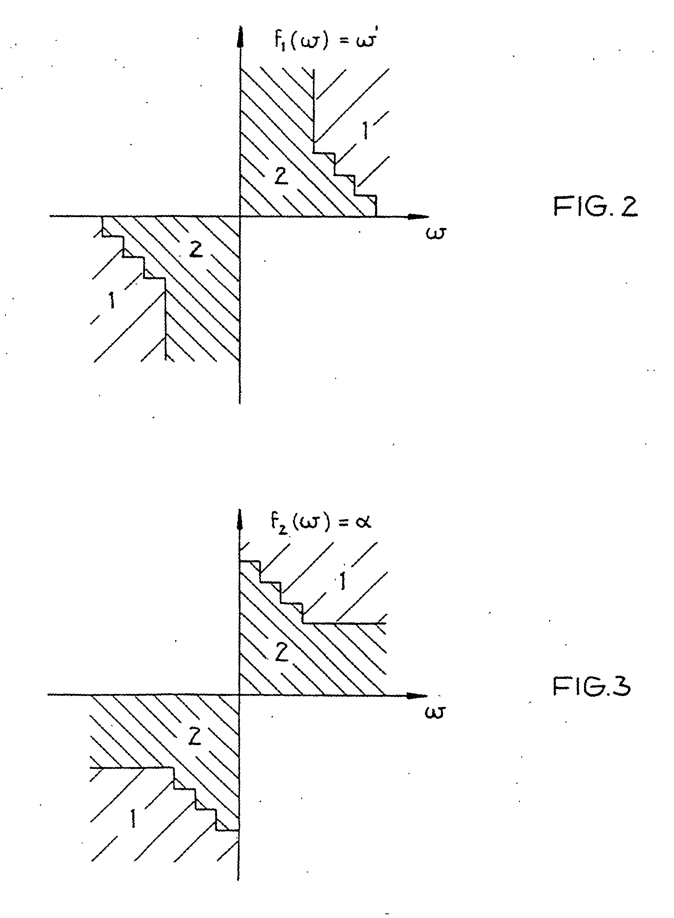

In der Bewertungseinheit 11 wird anhand einer Bewertungsfunktion $f_1$ jeder Wert $\omega_i'$ des Differentials ($\omega_i'$) bewertet. Diese Bewertungsfunktion $f_1$ koppelt jeden Wert $\omega_i$ der Drehratendaten ($\omega_i$) mit dem jeweils zugehörigen Differentialwert $\omega_i'$ entsprechend der in Figur 2 dargestellten Treppenfunktion, die im 1. und 3. Quadranten 3-stufig ausgebildet ist. Diese drei Stufen stellen jeweils eine $\omega_i$ - $\omega_i'$ - schwellwertkombination dar, so daß bei einer Überschreitung einer dieser Stufen die Bewertungseinheit 11 ein Auslösesignal an das AND-Gatter 15 sendet. Dabei stellen die mit den Bezugszeichen 2 bezeichneten Gebiete in dem Diagramm die No-Fire-Gebiete dar, in denen die entsprechenden werte zu keiner Auslösung führen, dagegen werden die mit dem Bezugszeichen 1 bezeichneten Gebiete als Fire-Gebiete dargestellt, die einen kritischen, möglicherweise zu einem Überschlag führenden Fahrzeugzustand anzeigen. Diese Bewertungsfunktion $f_1$ kann entsprechend dem Fahrzeugtyp und den Anforderungen des Fahrzeugherstellers modifiziert werden, d. h. entweder mehr oder weniger Stufen aufweisen. Die Werte der einzelnen Stufen werden anhand von Crashdaten und Simulationen festgelegt.

Mit der entsprechenden Anzahl von festgelegten Schwellwertkombinationen wird Kanal 1, der in diesem Sinne ein Hauptkanal darstellt, in die entsprechende Anzahl voneinander unabhängiger Kanäle aufgespaltet. Im Zusammenhang mit dem in Figur 2 erläuterten Ausführungsbeispiel einer Bewertungsfunktion $f_1$ ergäben sich drei Kanäle mit der Bezeichnung 11, 12 und 13.

Falls die entsprechenden Schwellwerte von den Größen $\omega_i$ und $\omega_i'$ auf einem der Kanäle 11, 12 oder 13 überschritten werden, gibt die Bewertungseinheit 11 an das AND-Gatter 15 ein Auslösesignal ab, das jedoch erst dann über ein ODER-Gatter 16 einer Auslöseeinheit 17 einer Sicherheitseinrichtung (in der Figur nicht dargestellt), wie beispielsweise eines Überrollbügels, Gurtstraffers oder Airbags zugeführt wird, wenn gleichzeitig auch die Vorzeichenbewertungseinheit 9 ein entsprechendes Signal dem AND-Gatter 15 zuführt.

Mit der Vorzeichenbewertungseinheit 9 wird ein sogenanntes Signum-Kriterium geprüft, wonach ein Signal erzeugt wird, sobald ein Wert $\omega_i$ der Drehratendaten ($\omega_i$) und der zugehörige Wert $\omega_i'$ des Differentials ($\omega_i'$) das gleiche Vorzeichen aufweisen, andernfalls wird bei einem Überschlag die Auslösung solange verzögert, bis gleiche Vorzeichen vorliegen. Liegen unterschiedliche Vorzeichen vor, ist damit zu rechnen daß die Fahrlage des Fahrzeuges sich stabilisieren wird.

Auf Kanal 1 werden also zwei Kriterien überprüft, so daß eine Auslösung der Auslöseeinheit 17 erst dann erfolgt, wenn beide Bedingungen gleichzeitig erfüllt sind.

Im folgenden soll nun die Arbeitsweise des Kanals 2 erläutert werden. Gemäß Figur 1 werden dazu mittels einer dem Tiefpassfilter TP3 nachgeschalteten Integratoreinheit 7 die Werte der Drehratendaten ($\omega_i$) zur Bildung eides Integrals $\int \varphi dt_i$ aufsummiert. Um eine gegen unendlich strebende Integral-Drift zu verhindern, wird eine Integralrückführung mittels einer Rückführfunktion $R(\int \varphi dt,)$ durchgeführt, die derart definiert ist, daß bei einem über eine längere Zeitdauer konstant vorliegenden Integrationswert dieser in Zeitabschnitten von je 100 ms um 15% zurückgeführt wird. Der durch Summation der Drehratendaten ($\omega_i$) gebildete und mittels der Rückführfunktion $R(\int \varphi dt_i)$ modifizierte Integrationswert entspricht näherungsweise dem Neigungswinkel $\alpha$ des Fahrzeuges.

Dieser Neigungswinkel $\alpha$ wird sowohl einer Vorzeichenbewertungseinheit 6 als auch einer Bewertungseinheit 8 zugeführt, die außerdem zwecks Zuführung der Drehratendaten ($\omega_i$) dem Tiefpassfilter TP3 nachgeschaltet sind.

In der Bewertungseinheit 8 wird anhand einer Bewertungsfunktion $f_2$ für jeden wert $\omega_i$ der Drehratendaten ($\omega_i$) eine Bewertung des Wertes des Neigungswinkel $\alpha$ durchgeführt. Führt diese Bewertung dazu, daß ein Überschlag des Fahrzeuges zu erwarten ist, gibt diese Bewertungseinheit 8 an ein AND-Gatter 12 ein Auslösesignal ab.

Die Bewertung, ob ein $\alpha$ - $\omega_i$ - Wertepaar einen zu einem Überschlag führenden Fahrzeugzustand anzeigt, wird beispielsweise anhand einer Kennlinie gemäß Figur 3 durchgeführt, die eine Treppenfunktion mit vier Stufen darstellt, sodaß eine Entscheidungsfindung auf vier verschiedenen, voneinander unabhängigen Ebenen möglich ist, mit der Folge, daß sich Kanal 2 aufteilen läßt in die Kanäle 21 bis 24. Auch auf Kanal 2 ist - wie oben im Zusammenhang mit Kanal 1 schon erläutert - jede Treppenfunktion mit einer andere Anzahl von Stufen realisierbar. Entsprechend dem Diagramm nach Figur 2 werden auch in demjenigen nach Figur 3 die No-Fire-Gebiete mit einem Bezugszeichen 2 und die Fire-Gebiete mit einem Bezugszeichen 1 bezeichnet.

Das von der Bewertungseinheit 8 erzeugte Auslösesignal wird jedoch erst dann über das ODER-Gatter 16 der Auslöseeinheit 17 der Sicherheitseinrichtung weitergeleitet, wenn gleichzeitig auch die Vorzeichenbewertungseinheit 6 ein entsprechendes Signal dem AND-Gatter 12 zuführt.

Mit der Vorzeichenbewertungseinheit 6 wird, entsprechend der Funktion der Vorzeichenbewertungseinheit 9 aus Kanal 1, ebenfalls das Signum-Kriterium geprüft, wonach ein Signal erzeugt wird, sobald ein wert der Drehratendaten ($\omega_i$) und der Neigungswinkel $\alpha$ des Fahrzeuges gleichzeitig das gleiche Vorzeichen aufweisen, andernfalls wird bei einem Überschlag die Auslösung solange verzögert, bis gleiche Vorzeichen vorliegen.

Auf Kanal 2 werden also ebenfalls zwei Kriterien überprüft, so daß eine Auslösung der Auslöseeinheit 17 erst erfolgt, wenn beide vorgegebenen Bedingungen gleichzeitig erfüllt sind.

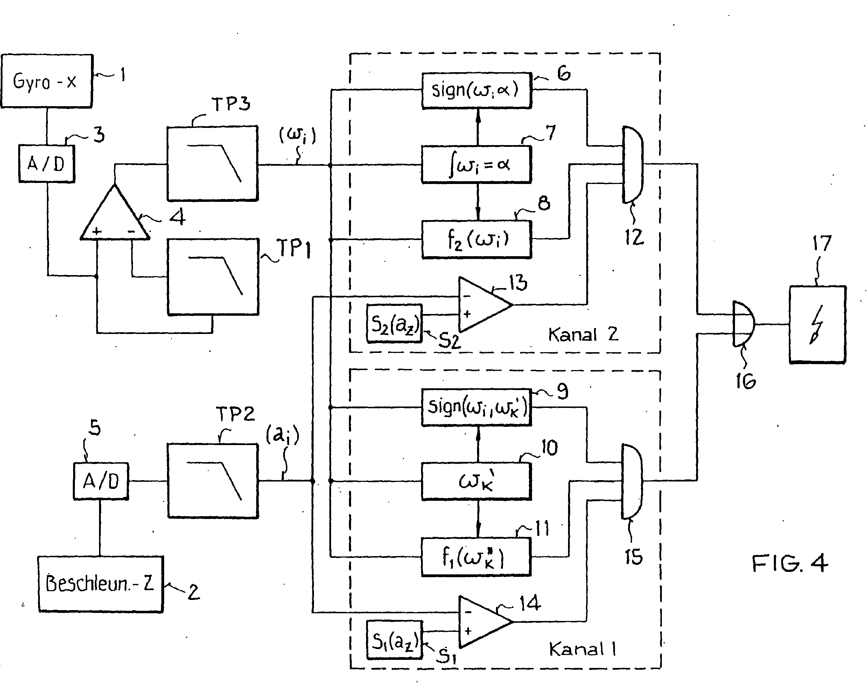

Das Ausführungsbeispiel gemäß Figur 4 weist gegenüber demjenigen gemäß Figur 1 neben dem Drehratensensor 1 einen Beschleunigungssensor 2 auf, dessen Signale in ähnlicher Weise aufbereitet und den beiden Kanälen 1 und 2 zur Auswertung zugeführt werden. Ein weiterer Unterschied zum Ausführungsbeispiel gemäß Figur 1 besteht in der von einer Differentiatoreinheit 10 des Kanals 1 durchgeführten Differentiation, die nun nicht mehr der üblichen mathematischen Differentiation entspricht.

Die folgende Beschreibung beschränkt sich daher auf die Erläuterung der mit dem Beschleunigungssensor 2 verbundenen zusätzlichen Auswertung sowie der Darstellung der mit der Differentiatoreinheit 10 durchgeführten Differentiation.

Das von dem Beschleunigungssensor 2 erzeugte Beschleunigungssignal in Richtung des Fahrzeugbodens, also in z-Richtung, wird in den Kanälen 1 und 2 jeweils unabhängig voneinander ausgewertet. Damit erhöht sich in jedem Kanal die Anzahl der für eine Auslösung der Sicherheitseinrichtung gleichzeitig zu erfüllenden Bedingungen gegenüber dem Ausführungsbeispiel nach Figur 1 auf drei, bevor die jeweiligen AND-Gatter 15 und 12 der Kanäle 1 und 2 ein entsprechendes Auslösesignal über das ODER-Gatter 16 der Auslöseeinheit 17 zuführen können. Mit dieser zusätzlichen Auswertung von Beschleunigungsdaten kann eine weitere Verbesserung hinsichtlich der Differenzierung nach Fire-szenarien und nach No-fire-szenarien durchgeführt werden.

Zur Aufbereitung wird das Beschleunigungssignal ebenfalls mittels eines A/D-Wandlers 5 mit der gleichen Abtastfrequenz entsprechend derjenigen des A/D-Wandlers 3 von 1 kHz digitalisiert und als Beschleunigungsdaten ($a_i$) genauso wie die Drehratendaten ($\omega_i$) einer Glättung unterzogen. Hierzu dient ein digitales Tiefpassfilter TP2 1. Ordnung mit einer Grenzfrequenz von 4 Hz.

Die Auswertung der Drehratendaten ($\omega_i$) erfolgt über Kanal 1 auf der Grundlage einer durch eine Art von Differentiation der Drehratendaten ($\omega_i$) gebildeten Größe, während die Auswertung über Kanal 2 - entsprechend dem Ausführungsbeispiel gemäß Figur 1 - auf der durch Integration der Drehratendaten ($\omega_i$) gebildeten Größe $\int \varphi dt_i$ beruht.

Gemäß Figur 4 werden in Kanal 1 mittels einer Differentiatoreinheit 10 auf der Grundlage der für die Digitalisierung verwendeten Abtastfrequenz von 1kHz innerhalb eines Zeitintervalles von 3 ms, also zu Datenerfassungszeitpunkten $t_{i-3}$, $t_{i-2}$, $t_{i-1}$ und $t_i$ Differenzenquotienten $\Delta\omega_j$ mit j = i, i-1, i-2 und i-3 folgendermaßen gebildet:

$$\Delta\omega_i = (\omega_i - \omega_{i-1}) / (t_i - t_{i-1})$$

$$\Delta\omega_{i-1} = (\omega_{i-1} - \omega_{i-2}) / (t_{i-1} - t_{i-2})$$

$$\Delta\omega_{i-2} = (\omega_{i-2} - \omega_{i-3}) / (t_{i-2} - t_{i-3})$$

Anschließend werden diese Differenzenquotienten $\Delta\omega_j$ mit j=i, i-1, i-2 und i-3 zur Bildung eines Differentialwertes $\omega_i'$ aufsummiert:

$$\omega_i' = \Delta\omega_i + \Delta\omega_{i-1} + \Delta\omega_{i-2}$$

Sich wiederholend wird im nächsten Datenerfassungszeitpunkt $t_{i+1}$ der nächste Differentialwert $\omega_{i+1}'$ berechnet, so daß man eine Folge von Differentialwerten ($\omega_1'$) erhält, die im folgenden als Differential ($\omega_1'$) bezeichnet wird.

Somit wird mit jedem neuen Datenerfassungszeitpunkt $t_{i+1}$, $t_{i+2}$, $t_{i+3}$ ..... ein neues Zeitintervall $t_{i+1} - t$, , $t_{i+2} - t_{i+1}$, $t_{i+3} - t_{i+2}$, ..... berechnet, das zusammen mit den jeweils zwei vorangehenden Zeitintervallen zur Berechnung des Differentials dienen, wobei lediglich der zu dem neu gebildeten Zeitintervall gehörende Differenzenquotient gebildet werden muß, um anschließend mit den schon vorliegenden Differenzenquotienten der vorangehenden Zeitintervalle aufsummiert zu werden. Infolgedessen überlappen sich bei zwei direkt aufeinanderfolgenden Differentialwerten $\omega_i'$ und $\omega_{i+1}'$ zwei Zeitintervalle, womit sich die gleiche Taktrate ergibt, die auch für die Digitalisierung verwendet wird.

Die Werte dieses Differentials ($\omega_i'$) werden sowohl einer Vorzeichenbewertungseinheit 9 als auch einer Bewertungseinheit 11 zugeführt, wo eine zum Ausführungsbeispiel gemäß Figur 1 entsprechende Auswertung erfolgt.

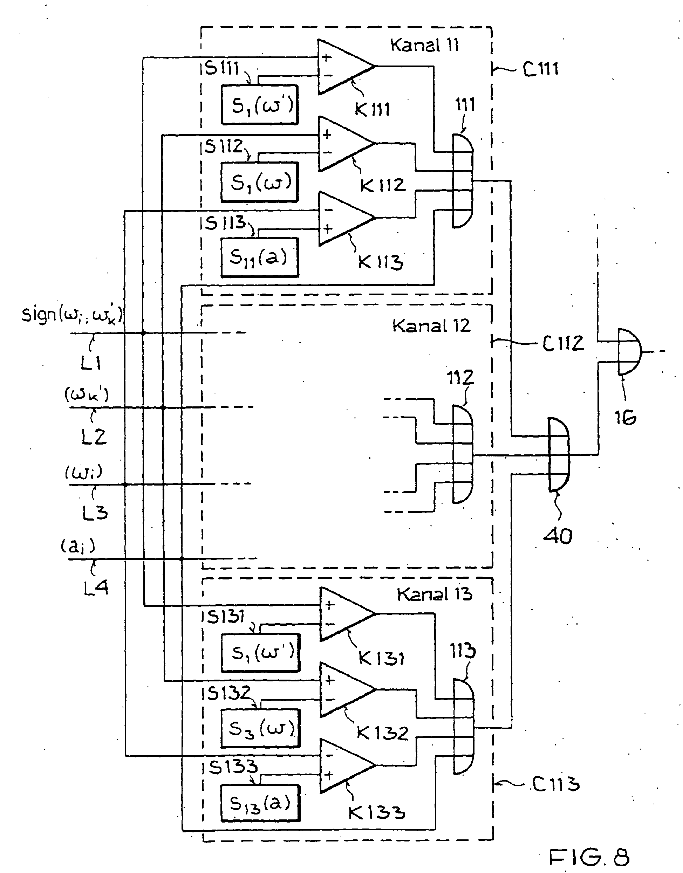

In der Bewertungseinheit 11 wird anhand einer Bewertungsfunktion $f_1$ jeder wert $\omega_i'$ des Differentials ($\omega_i'$) bewertet. Diese Bewertungsfunktion $f_1$ koppelt jeden Wert $\omega_i$ der Drehratendaten ($\omega_i$) mit dem jeweils zugehörigen Differentialwert $\omega_i'$ entsprechend der in Figur 5 dargestellten Treppenfunktion, die im 1. und 3. Quadranten 3-stufig ausgebildet ist. Diese drei Stufen stellen jeweils eine $\omega_i - \omega_i'$ - Schwellwertkombination dar, so daß bei einer Überschreitung einer dieser Stufen die Bewertungseinheit 11 ein Auslösesignal an das AND-Gatter 15 sendet. Dabei stellen die mit den Bezugszeichen 2 bezeichneten Gebiete in dem Diagramm die No-Fire-Gebiete dar, in denen die entsprechenden Werte zu keiner Auslösung führen, dagegen werden die mit dem Bezugszeichen 1 bezeichneten Gebiete als Fire-Gebiete dargestellt, die einen kritischen, möglicherweise zu einem Überschlag führenden Fahrzeugzustand anzeigen.

Mit diesen drei Schwellwertkombinationen, deren werte in der Tabelle gemäß Figur 6 dargestellt sind, wird Kanal 1, der in diesem Sinne ein Hauptkanal darstellt, in drei voneinander unabhängige Kanäle 11, 12 und 13 aufgespaltet. Dabei gilt in gleicher Weise wie bei dem Ausführungsbeispiel gemäß Figur 1, daß entsprechend den Anforderungen der Automobilhersteller der Hauptkanal 1 auch eine geringere oder höhere Anzahl von Kanälen aufweisen kann.

Falls die entsprechenden Schwellwerte von den Größen $\omega_i$ und $\omega_i$' auf einem der Kanäle 11, 12 oder 13 überschritten werden, gibt die Bewertungseinheit 11 an das AND-Gatter 15 ein Auslösesignal ab, das jedoch erst dann über ein ODER-Gatter 16 einer Auslöseeinheit 17 einer Sicherheitseinrichtung (in der Figur nicht dargestellt), wie beispielsweise eines Überrollbügels, Gurtstraffers oder Airbags zugeführt wird, wenn gleichzeitig die vorzeichenbewertungseinheit 9 als auch ein Komparator 14 ein entsprechendes Signal dem AND-Gatter 15 zuführen.

Es ist auch möglich für die Werte des Differentials ($\omega_k$') eine niedrigere Taktrate zu wählen, indem ein Differentialwert $\omega_k$' nur für jeden zweiten Drehratenwert $\omega_i$ , $\omega_{i+2}$ , $\omega_{i+4}$ berechnet wird. Damit überlappt sich nur ein Zeitintervall bei zwei aufeinanderfolgenden Differentialwerten $\omega_k$' und $\omega_{k+1}$'. Falls nur für jeden dritten Drehratenwert $\omega_i$ , $\omega_{i+3}$ , $\omega_{i+6}$ ein Differentialwert berechnet wird, sind die zugehörigen Zeitintervalle disjunkt. Das hat zur Folge, daß in der Bewertungseinheit 11 nur jeder zweite bzw. jeder dritte wert $\omega_i$ der Drehratendaten ($\omega_i$) mit dem zugehörigen Wert des Differentials ($\omega_k$') bewertet wird.

Die Funktion der Vorzeichenbewertungseinheit 9 entspricht derjenigen aus Figur 1 und soll daher nicht mehr beschrieben werden.

Mit dem Komparator 14 wird die dynamische Stabilität des Fahrzeuges geprüft, indem die Werte der Beschleunigungsdaten ($a_i$) mit einem von einer Schwellwerterzeugungsschaltung S1 erzeugten Schwellwert $S_1(a_z)$ als Stabilitätsschwelle verglichen werden, wobei dieser Schwellwert entsprechend den Kanälen 11, 12, und 13 drei Werte $S_{11}(a)$, $S_{12}(a)$ und $S_{13}(a)$ annimmt. Die Grundlage hierfür ist die in Richtung des Fahzeugbodens gemessene Beschleunigung, wobei der jeweilige Wert a, der Beschleunigung auf eine Schwellwertüberschreitung geprüft wird. Falls die entsprechende Schwelle überschritten wird, liegt ein entsprechendes Signal an dem AND-Gatter 15 an.

Die entsprechenden Schwellwerte $S_{1i}(a)$ mit i = 1, 2 und 3 für die Kanäle 11,12 und 13 sind in der Tabelle der Figur 7 aufgeführt, die relativ hohe Werte darstellen. Eine Fehlauslösung auf diesem Kanal 1 kann durch die hohen Drehgeschwindigkeitsschwellen gemäß Figur 6 verhindert werden. Die hohen Beschleunigungsschwellen verhindern folglich eine Auslösung nur dann, wenn das Beschleunigungssignal Werte annimmt, die auf eine außerordentlich stabile Fahrzeuglage hinweisen.

Auf Kanal 1 werden also drei Kriterien überprüft, so daß eine Auslösung der Auslöseeinheit 17 erst dann erfolgt, wenn alle vorgegebenen Bedingungen gleichzeitig erfüllt sind. Die entsprechende Entscheidungsfindung ist dabei auf drei verschiedenen, voneinander unabhängigen Ebenen möglich, indem eine entsprechende Anzahl von Schwellwertkombinationen - wie oben anhand der Figuren 6 und 7 erläutert wurde - vorgegeben wird, so daß sich daraus die genannten Kanäle 11, 12 und 13 ergeben. Die Aufspaltung des Kanals 1 in die Kanäle 11, 12 und 13 wird detaillierter in Figur 8 dargestellt und erläutert.

Gemäß dieser Figur 8 werden über Leitungen L1, L22, L3 und L4 die Größe sign ($\omega_i$, $\omega_i$'), die die Übereinstimmung der Vorzeichen der beiden Größen $\omega_i$ und $\omega_i$' anzeigt, das Differential ($\omega_i$'), die Drehratendaten ($\omega_i$) und die Beschleunigungsdaten ($a_i$) drei Auswerteeinheiten C111, C112 und C113 zugeführt, die die genannten Kanäle 11 bis 13 darstellen. Diese Auswerteeinheiten sind identisch mit jeweils drei Komparatoren K111, K112, K113 bis K131, K132, K133 mit zugehörigen Schwellwertschaltungen S111, S112, S113 bis S131, S132, S133 aufgebaut.

Den erstgenannten Komparatoren K111 bis K131 werden über deren nicht-invertierenden Eingängen die Werte des Differentials ($\omega_i$') und deren invertierenden Eingängen jeweils ein von den Schwellwertschaltungen S111 bis S131 erzeugten Schwellwert $S_i(\omega')$, für I=1, 2 und 3 zugeführt.

Den zweitgenannten Komparatoren K112 bis K132 werden über deren nicht-invertierenden Eingängen die Werte der Drehratendaten ($\omega_i$) und deren invertierenden Eingängen jeweils ein von den Schwellwertschaltungen S112 bis S132 erzeugten Schwellwert $S_i(\omega)$, für i = 1, 2 und 3 zugeführt.

Die für $\omega_i$ und $\omega_i$' vorgesehenen Schwellwerte $S_i(\omega)$ und $S_i(\omega')$ für i=1,....,3 ergeben sich aus der schon erläuterten Figur 6 mit zugehörigem Kennlinienverlauf in Figur 5.

Den drittgenannten Komparatoren K113 bis K133 werden über deren invertierenden Eingängen die Werte der Beschleunigungsdaten ($a_i$) und deren nicht-invertierenden Eingängen jeweils ein von den Schwellwertschaltungen S113 bis S133 erzeugten Schwellwert $S_i(a)$, für i=1, ...3 zugeführt. Die jedem Kanal 11 bis 13 zugeordneten Schwellwerte $S_{11}(a)$, $S_{12}(a)$ und $S_{13}(a)$ ergeben sich aus der schon erläuterten Figur 7.

Die Ausgänge der Komparatoren eines Kanals sind auf jeweils ein AND-Gatter 111 bis 113 geführt. Auf jedes dieser AND-Gatter wird auch das Ergebnis der Vorzeichenprüfung über die Leitung L1 geführt.

Somit kann auf jedem Kanal 11 bis 13 eine eigenständige Auslösung erfolgen, wobei das entsprechende Signal über eines der AND-Gatter 111 bis 113 und ein ODER-Gatter 40 dem ODER-Gatter 16 aus Figur 4 zugeführt wird.

Im folgenden soll nun die Arbeitsweise des Kanals 2 erläutert werden, dessen Funktion, bis auf diejenige eines Komparators 13 und einer Schwellwerterzeugungsschaltung S2 des Kanals 2 dem Ausführungsbeispiel gemäß Figur 1 entspricht.

Das mittels einer dem Tiefpassfilter TP3 nachgeschalteten Integratoreinheit 7 durch Aufsummierung der werte der Drehratendaten ($\omega_i$) gebildete Integral $\int \varphi dt_i$ wird mittels einer Rückführfunktion R($\int \varphi dt_i$) einer Integralrückführung unterworfen, um eine gegen unendlich strebende Integral-Drift zu verhindern. Diese Rückführfunktion R($\int \varphi dt$, ) ist derart definiert, daß bei einem über eine längere Zeitdauer konstant vorliegenden Integrationswert dieser in Zeitabschnitten von je 100 ms um 15% zurückgeführt wird. Der durch Summation der Drehratendaten ($\omega_i$) gebildete und mittels der Rückführfunktion R($\int \varphi dt_i$) modifizierte integrationswert entspricht näherungsweise dem Neigungswinkel $\alpha$ des Fahrzeuges.

Dieser Neigungswinkel $\alpha$ wird sowohl einer Vorzeichenbewertungseinheit 6 als auch einer Bewertungseinheit 8 zugeführt, die außerdem zwecks Zuführung der Drehratendaten ($\omega_i$) dem Tiefpassfilter TP3 nachgeschaltet sind.

In der Bewertungseinheit 8 wird anhand einer Bewertungsfunktion $f_2$ für jeden wert $\omega_i$ der Drehratendaten ($\omega_i$) eine Bewertung des Wertes des Neigungswinkel $\alpha$ durchgeführt. Führt diese Bewertung dazu, daß ein Überschlag des Fahrzeuges zu erwarten ist, gibt diese Bewertungseinheit 8 an ein AND-Gatter 12 ein Auslösesignal ab. Dieses Auslösesignal wird jedoch erst dann über das ODER-Gatter 16 der Auslöseeinheit 17 der Sicherheitseinrichtung 17 weitergeleitet, wenn gleichzeitig die Vorzeichenbewertungseinheit 6 als auch ein Komparator 13 ein entsprechendes Signal dem AND-Gatter 12 zuführen.

Mit der vorzeichenbewertungseinheit 6 wird wiederum das schon beschriebene Signum-Kriterium geprüft.

Mit dem Komparator 13 wird die dynamische Stabilität des Fahrzeuges geprüft, indem die werte der Beschleunigungsdaten ($a_i$) mit einem von einer Schwellwerterzeugungsschaltung S2 erzeugten Schwellwert $S_2(a_z)$ als Stabilitätsschwelle verglichen wird. Die Grundlage hierfür ist die in Richtung des Fahzeugbodens gemessene Beschleunigung, wobei der jeweilige Wert $a_i$ der Beschleunigung auf eine Schwellwertunterschreitung geprüft wird. Falls die entsprechende Schwelle unterschritten wird, liegt ein entsprechendes Signal am AND-Gatter 12 an.

Auf Kanal 2 werden also drei Kriterien überprüft, so daß eine Auslösung der Auslöseeinheit 17 erst erfolgt, wenn alle vorgegebenen Bedingungen gleichzeitig erfüllt sind. Die entsprechende Entscheidungsfindung ist dabei auf vier verschiedenen, voneinander unabhängigen Ebenen möglich, indem eine entsprechende Anzahl von Schwellwertkombinationen vorgegeben wird, so daß sich Kanal 2 aufteilen läßt in die Kanäle 21 bis 24, wie im folgenden erläutert wird. Auch hier ist in gleicher Weise, wie im Zusammenhang mit der Beschreibung des Kanals 1 erwähnt wurde, jede andere Anzahl von Kanalaufteilungen möglich.

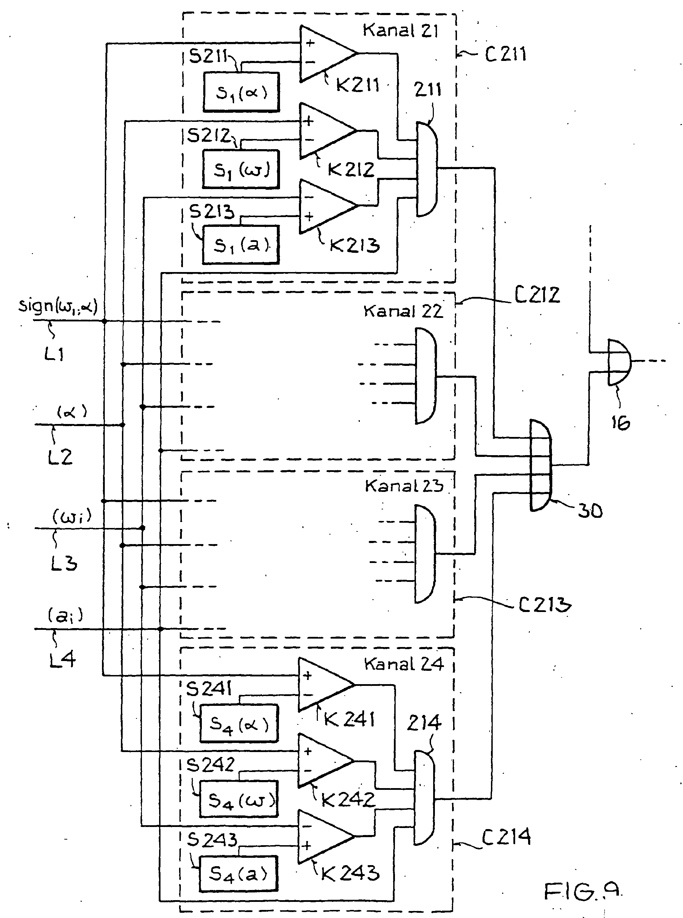

In Figur 9 werden über Leitungen L1 bis L4 die Größe sign ($\omega_i$, $\alpha$), die die Übereinstimmung der Vorzeichen der beiden Größen $\omega_i$ und $\alpha$ anzeigt, der Neigungswinkel $\alpha$, die Drehratendaten ($\omega_i$) und die Beschleunigungsdaten ($a_i$) vier Auswerteeinheiten C211 bis C214 zugeführt, die die genannten Kanäle 21 bis 24 darstellen. Diese Auswerteeinheiten sind identisch mit jeweils drei Komparatoren K211, K212, K213 für Kanal 21 bis Komparatoren K241, K242, K243 für Kanal 24 mit zugehörigen Schwellwerterzeugungsschaltungen S211, S212, S213 bis S241, S242, S243 aufgebaut.

Den erstgenannten Komparatoren K211 bis K241 werden über deren nicht-invertierenden Eingängen der Neigungswinkel $\alpha$ und deren invertierenden Eingängen jeweils ein von den Schwellwerterzeugungsschaltungen S211 bis S241 erzeugten Schwellwert $S_i(\alpha)$, für i=1, ...4 zugeführt.

Den zweitgenannten Komparatoren K212 bis K242 werden über deren nicht-invertierenden Eingängen die werte der Drehratendaten ($\omega_i$) und deren invertierenden Eingängen jeweils ein von den Schwellwerterzeugungsschaltungen S212 bis S242 erzeugten Schwellwert $S_i(\omega)$, für I=1, ...4 zugeführt.

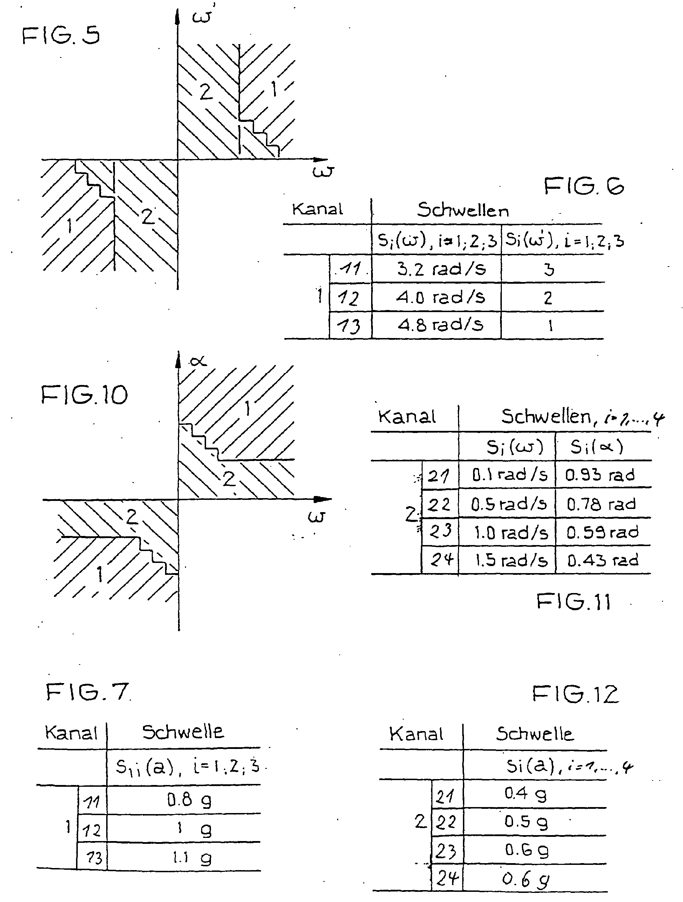

Die für $\alpha$ und $\omega_i$ vorgesehenen Schwellwerte $S_i(\alpha)$ und $S_i(\omega)$ für i = 1,....,4 ergeben sich aus Figur 11 mit zugehörigem Kennlinienverlauf in Figur 10. Die Kennlinie zeigt eine vierstufige Treppenfunktion, wobei die vier Stufen die $\omega$-$\alpha$- Schwellwertkombinationen für die Kanäle 21 bis 24 darstellen. Die Werte für den Neigungswinkel $\alpha$ und die Werte der Drehratendaten $\langle\omega_i\rangle$ werden auf ein Überschreiten dieses vierstufigen Kennlinienbereiches im ersten und dritten Quadranten geprüft, die als Fire-Gebiete mit dem Bezugszeichen 1 in dem Diagramm bezeichnet sind. Die No-Fire-Gebiete sind mit Bezugszeichen 2 bezeichnet.

Den drittgenannten Komparatoren K213 bis K243 werden über deren invertierenden Eingängen die Werte der Beschleunigungsdaten ($a_i$) und über deren nicht-invertierenden Eingängen jeweils ein von den Schwellwerterzeugungsschaltungen S213 bis S243 erzeugten Schwellwert $S_i(a)$, für i=1, ...4 zugeführt. Die den Kanälen 21 bis 24 zugeordneten Schwellwerte ergeben sich aus Figur 12. Durch die so gesetzten Schwellwerte, die einen Spielraum für die Toleranzen im Offsetbereich des Beschleunigungsaufnehmers offenlassen, wird beispielsweise eine Auslösung in einer Steilkurve verhindert.

Die Ausgänge der Komparatoren eines Kanals sind auf jeweils ein AND-Gatter 211 bis 214 geführt. Auf jedes dieser AND-Gatter wird auch das Ergebnis der Vorzeichenprüfung über die Leitung L1 geführt.

Somit kann auf jedem Kanal 21 bis 24 eine eigenständige Auslösung erfolgen, wobei das entsprechende Signal über eines der AND-Gatter 211 bis 214 und ein ODER-Gatter 30 dem ODER-Gatter 16 zugeführt wird.

Mit dem Ausführungsbeispiel gemäß den Figuren 8 und 9 steht damit ein Auslöseverfahren zur Verfügung, das sieben voneinander unabhängige Kanäle aufweist, mittels derer eine Auslöseentscheidung getroffen werden kann. Dabei ist es natürlich möglich auch weniger oder mehr Kanäle zu realisieren, indem die in dem beiden Hauptkanälen 1 und 2 vorgesehenen Stufen entsprechend den Forderungen seitens der Kraftfahrzeughersteller variiert werden.

**Patentansprüche**

1. Verfahren zur Auslösung wenigstens einer Sicherheitseinrichtung in einem Kraftfahrzeug im Falle eines Überschlages, bei dem

   a) das von einem die Drehgeschwindigkeit der Wankbewegung des Kraftfahrzeuges sensierenden Drehratensensor (1) abgegebene Sensorsignal ($\omega$) zur Bildung des Integrals ($\int \omega dt$) integriert wird und zur Bildung eines Differentialwertes ($d\omega/dt$) differenziert wird, **dadurch** gehennzeichnet, daß
   b) in vorgegebenen Zeitintervallen für jeden Wert ($\omega$) der Drehgeschwindigkeit mittels einer ersten Bewertungsfunktion ($f_1$) der Differentialwert ($d\omega/dt$) bewertet wird,
   c) für jeden Wert ($\omega$) der Drehgeschwindigkeit mittels einer zweiten Bewertungsfunktion ($f_2$) der Wert des Integrals ($\int \omega dt$) bewertet wird, und
   d) in Abhängigkeit der Ergebnisse der unabhängig voneinander durchgeführten Bewertungen der Differentialwerte ($d\omega/dt$) und der Werte des Integrals ($\int \omega dt$) die Sicherheitseinrichtung ausgelöst wird.

2. Verfahren nach Anspruch 1, bei dem der Wert ($f_1(\omega)$) der ersten Bewertungsfunktion ($f_1$) für jeden zu bewertenden Wert (w) der Drehgeschwindigkeit mit dem zugehörigen Differentialwert ($d\omega/dt$) verglichen wird, und die Sicherheitseinrichtung ausgelöst wird, falls der wert ($f_1(\omega)$) der Bewertungsfunktion ($f_1$) von dem Differentialwert ($d\omega/dt$) überschritten wird.

3. Verfahren nach Anspruch 1 oder 2, bei dem der Wert ($f_2(\omega)$) der zweiten Bewertungsfunktion ($f_2$) für jeden wert $\omega$) der Drehgeschwindigkeit mit dem zugehörigen wert des Integrals ($\int \omega dt$) verglichen wird, und die Sicherheitseinrichtung ausgelöst wird, falls der Wert ($f_2(\omega)$) der Bewertungsfunktion ($f_2$) von dem Wert des Integrals $\int \omega dt$) überschritten wird.

4. Verfahren nach einem der vorangehenden Ansprüche, bei dem

   a) zur Bildung von Drehratendaten ($\omega_i$) in aufeinanderfolgenden, vorzugsweise äquidistanten Datenerfassungszeitpunkten ($t_i$) die Sensorsignale ($\omega$) des Drehratensensors (1) abgetastet werden, und
   b) für jeweils aufeinanderfolgende Datenerfassungszeitpunkte ($t_{i-1}$, $t_i$) als Differentialwert ($d\omega_i/dt_i$) der Differenzenqotient (($\omega_i - \omega_{i-1}$) / ($t_i - t_{i-1}$)) gebildet wird.

5. Verfahren nach einem Ansprüche 1 bis 3, bei dem,

   a) zur Bildung von Drehratendaten ($\omega_i$) in aufeinanderfolgenden, vorzugsweise äquidistanten Datenerfassungszeitpunkten ($t_1$) die Sensorsignale ($\omega$) des Drehratensensors (1) abgetastet werden,
   b) mit wenigstens drei aufeinanderfolgenden Datenerfassungszeitpunkten ($t_{i-3}$, $t_{i-2}$, $t_{i-1}$, $t_i$) wenigstens zwei disjunkte Zeitintervalle ($t_i - t_{i-1}$, $t_{i-1} - t_{i-2}$, $t_{i-2} - t_{i-3}$) erzeugt werden,
   c) aus den zu den drei aufeinanderfolgenden Datenerfassungszeitpunkten ($t_{i-3}$, $t_{i-2}$, $t_{i-1}$, $t_i$) gehörenden Drehratenwerte ($\omega_i$, $\omega_{i-1}$, $\omega_{i-2}$, $\omega_{i-3}$) die Differenzenquotienten ($\Delta\omega_j$, j=1,2, 3) gebildet werden, und
   d) die Differenzenquotienten ($\Delta\omega_j$, j =1,2,3) zur Bildung eines einem der genannten Drehratenwerte ($\omega_i$, $\omega_{i-1}$, $\omega_{i-2}$, $\omega_{i-3}$) zuzuordnenden Differentialwertes ($\omega_k'$) aufsummiert werden.

6. Verfahren nach Anspruch 5, bei dem

   e) im Datenerfassungszeitpunkt ($t_i$) die Verfahrensschritte b) bis d) durchgeführt werden, wobei dem erfaßten Wert ($\omega_i$) der Drehrate der gemäß Verfahrensschritt d) berechnete Differentialwert ($\omega_k'$) zugeordnet wird, und
   f) in darauffolgenden Datenerfassungszeitpunkten ($t_{i+1}$, $t_{i+2}$, $t_{i+3}$, ....) sukzessive Verfahrensschritt e) wiederholt wird.

7. Verfahren nach einem der vorangehenden Ansprüche, bei dem

   a) zur Bildung von Drehratendaten ($\omega_i$) in aufeinanderfolgenden, vorzugsweise äquidistanten Datenerfassungszeitpunkten ($t_1$) die Sensorsignale ($\omega$) des Drehratensensors (1) abgetastet werden, und
   b) zur Berechnung des Integrals ($\int \varphi dt_i$) über den Werten der Drehratendaten ($\omega_i$) diese aufsummiert werden.

**8.** Verfahren nach Anspruch 7, bei dem zur Rückführung des integrals ($\int \varphi dt_i$) eine Rückführfunktion R($\int \varphi dt_i$) berechnet wird.

**9.** Verfahren nach Anspruch 8, bei dem die Rückführung des integrals ($\int \varphi dt_i$) stufenweise erfolgt.

**10.** Verfahren nach Anspruch 9, bei dem die Rückführung des Integrals ($j\omega_i dt_i$) in Zeitabschnitten ($\Delta t$) um x % zurückgeführt wird, wobei $\Delta t$ in dem Bereich 1 bis 200 ms und x in dem Bereich 10 bis 20 liegt.

**11.** Verfahren nach einem der vorangehenden Ansprüche, bei dem die erste und zweite Bewertungsfunktion ($f_1$, $f_2$) jeweils eine Treppenfunktion darstellen.

**12.** Verfahren nach Anspruch 11, bei dem die Treppenfunktionen ($f_1$, $f_2$) monoton fallend und eine begrenzte Anzahl von Stufen aufweisen.

**13.** Verfahren nach einem der Ansprüche 1 bis 10, bei dem die erste und zweite Bewertungsfunktion ($f_1$, $f_2$) jeweils eine lineare Funktion darstellen.

**14.** Verfahren nach einem der vorangehenden Ansprüche, bei dem neben der ersten Bewertungsfunktion ($f_1$) als weitere Bewertungsfunktion ($sign_1$) das Vorzeichen der Werte ($\omega_i$ $\omega_i$) der Drehgeschwindigkeit und das Vorzeichen des zugehörigen Differentialwertes ($d_\omega/dt$, $d_\omega/dt_i$, $\omega_k'$) verglichen werden, und eine Auslösung der Sicherheitseinrichtung verhindert wird, wenn die Vorzeichen unterschiedlich sind.

**15.** Verfahren nach einem der vorangehenden Ansprüche, bei dem neben der zweiten Bewertungsfunktion ($f_2$) als weitere Bewertungsfunktion ($sign_2$) das Vorzeichen der Werte ($\omega$, $\omega_i$) der Drehgeschwindigkeit und das Vorzeichen des zugehörigen integrals ($\int \omega dt$, $f\omega_i dt_i$) verglichen werden, und eine Auslösung der Sicherheitseinrichtung verhindert wird, wenn die Vorzeichen unterschiedlich sind.

**16.** Verfahren nach einem der vorangehenden Ansprüche, bei dem zur Erfassung der Vertikalbeschleunigung ($a_2$) des Kraftfahrzeuges ein Beschleunigungssensor (2) vorgesehen ist.

**17.** Verfahren nach Anspruch 16, bei dem das von dem Beschleunigungssensor (2) abgegebene Sensorsignal ($a_z$) zur Erzeugung von Beschleunigungsdaten ($a_i$) in den Datenerfassungszeitpunkten ($t_i$) abgetastet wird.

**18.** Verfahren nach Anspruch 17, bei dem die Werte der Beschleunigungsdaten ($a_i$) mit wenigstens einer Stabilitäts-schwelle $S(a_2)$ verglichen werden und eine Auslösung der Sicherheitseinrichtung verhindert wird, wenn diese Stabilitätsschwelle $S(a_z)$ von den Werten der Beschleunigungsdaten ($a_i$) erreicht wird.

**Claims**

**1.** Method for tripping at least one safety device in a motor vehicle in the event of roll-over, in which

a) the sensor signal (w) outputted by a rotation rate sensor (1) sensing the rotational speed of the rolling motion of the motor vehicle is integrated in order to form integral ($\int \omega dt$) and differentiated in order to form a differential value ($d\omega/dt$), **characterized in that**
b) for each value ($\omega$) of rotational speed, differential value ($d\omega/dt$) is evaluated by means of a first evaluating function ($f_1$) in predetermined time intervals;
c) for each value ($\omega$) of rotational speed, value of integral ($\int \omega dt$) is evaluated by means of a second evaluating function ($f_2$); and
d) the safety device is tripped depending on the results of the evaluations of differential values ($dw/dt$) and of values of integral ($\int \omega dt$), said evaluation of differential values being carried out independently of said evaluation of integral values.

**2.** Method according to claim 1, in which for each value ($\omega$) of rotational speed to be evaluated, value ($f_1(\omega)$) of the first evaluating function ($f_1$) is compared with the associated differential value ($d\omega/dt$), and the safety device is tripped if value ($f_1(\omega)$) of evaluating function ($f_1$) is exceeded by differential value ($d\omega/dt$).

**3.** Method according to claim 1 or 2, in which for each value (w) of rotational speed to be evaluated, value ($f_2(\omega)$) of

the second evaluating function ($f_2$) is compared with the associated value of integral ($\int \omega dt$), and the safety device is tripped if value ($f_2(\omega)$) of evaluating function ($f_2$) is exceeded by value of integral ($\int \omega dt$).

4. Method according to any one of the preceding claims, in which

   a) the sensor signals (w) of the rotation rate sensor (1) are sampled at successive and preferably equidistant data acquisition instants ($t_i$) in order to form rotation rate data ($\omega_i$); and
   b) differential quotient (($\omega_i - \omega_{i-1}$) / ($t_i - t_{i-1}$)) is formed as differential value ($d\omega_i/dt_i$) for each pair of successive data acquisition instants ($t_{i-1}$, $t_i$).

5. Method according to any one of claims 1 to 3, in which

   a) the sensor signals ($\omega$) of the rotation rate sensor (1) are sampled at successive and preferably equidistant data acquisition instants ($t_i$) in order to form rotation rate data ($\omega_i$);
   b) at least two disjunctive time intervals ($t_i - t_{i-1}$, $t_{i-1} - t_{i-2}$, $t_{i-2} - t_{i-3}$) are generated with at least three successive data acquisition instants ($t_{i-3}$, $t_{i-2}$, $t_{i-1}$, $t_i$);
   c) differential quotients ($\Delta\omega_j$, j = 1,2,3) are formed from the rotation rate values ($\omega_i$, $\omega_{i-1}$, $\omega_{i-2}$, $\omega_{i-3}$) that belong to the three successive data acquisition instants ($t_{i-3}$, $t_{i-2}$, $t_{i-1}$, $t_i$); and
   d) differential quotients ($\Delta\omega_j$, j = 1,2,3) are summed up in order to form a differential value ($\omega_k'$) that is to be assigned to one of said rotation rate values ($\omega_i$, $\omega_{i-1}$, $\omega_{i-2}$, $\omega_{i-3}$).

6. Method according to claim 5, in which

   e) procedure steps b) to d) are carried out at data acquisition instant ($t_i$), wherein differential value ($\omega_k'$) calculated according to procedure step d) is assigned to the acquired value ($\omega_i$) of the rotation rate; and
   f) procedure step e) is successively repeated at subsequent data acquisition instants ($t_{i+1}$, $t_{i+2}$, $t_{i+3}$, ....).

7. Method according to any one of the preceding claims, in which

   a) the sensor signals (w) of the rotation rate sensor (1) are sampled at successive and preferably equidistant data acquisition instants ($t_i$) in order to form rotation rate data ($\omega_i$); and
   b) the values of rotation rate data ($\omega_i$) are summed up in order to calculate integral ($\int \varphi dt_i$) over said values.

8. Method according to claim 7, in which a feedback function R($\int \varphi dt_i$) is calculated for feedback of integral ($\int \varphi dt_i$).

9. Method according to claim 8, in which the feedback of integral ($\int \varphi dt_i$) is carried out step by step.

10. Method according to claim 9, in which the feedback of integral ($\int \varphi dt_i$) is carried out by x % in time segments (At), wherein $\Delta t$ ranges from 1 to 200 ms and x ranges from 10 to 20.

11. Method according to any one of the preceding claims, in which the first evaluating function ($f_1$) and the second evaluating function ($f_2$) each represent a step function.

12. Method according to claim 11, in which step functions ($f_1$, $f_2$) are monotonic decreasing and comprise a limited number of steps.

13. Method according to any one of claims 1 to 10, in which the first evaluating function ($f_1$) and the second evaluating function ($f_2$) each represent a linear function.

14. Method according to any one of the preceding claims, in which, in addition to the first evaluating function ($f_1$), a further evaluating function ($sign_1$) is provided that serves to compare the sign of values ($\omega$, $\omega_i$) of rotational speed with the sign of the associated differential value (dw/dt, $d\omega_i/dt_i$, $\omega_k'$), and the safety device is prevented from being tripped if the signs differ from each other.

15. Method according to any one of the preceding claims, in which, in addition to the second evaluating function ($f_2$), a further evaluating function ($sign_2$) is provided that serves to compare the sign of values ($\omega$, $\omega_i$) of rotational speed with the sign of the associated integral ($\int \omega dt$, $\int \varphi dt_i$), and the safety device is prevented from being tripped if the signs differ from each other.

**16.** Method according to any one of the preceding claims, in which an acceleration sensor (2) is provided for detecting the vertical acceleration ($a_z$) of the motor vehicle.

**17.** Method according to claim 16, in which the sensor signal ($a_z$) outputted by the acceleration sensor (2) is sampled at the data acquisition instants ($t_i$) in order to generate acceleration data ($a_i$).

**18.** Method according to claim 17, in which the values of the acceleration data ($a_i$) are compared with at least one stability threshold $S(a_z)$, and the safety device is prevented from being tripped if the values of the acceleration data ($a_i$) reach this stability threshold $S(a_z)$.


**Revendications**

**1.** Procédé de déclenchement d'au moins un équipement de sécurité dans un véhicule automobile en cas de tonneau, dans lequel

a) le signal de capteur ($\omega$) délivré par un capteur de taux de rotation (1) détectant la vitesse de rotation du mouvement oscillant du véhicule automobile est intégré pour la formation de l'intégrale ($\int \omega dt$) et est différencié pour la formation d'une valeur différentielle ($d\omega/dt$), **caractérisé en ce que**

b) dans des intervalles de temps prédéfinis, la valeur différentielle ($d\omega/dt$) est évaluée pour chaque valeur ($\omega$) de la vitesse de rotation au moyen d'une première fonction d'évaluation ($f_1$),

c) la valeur de l'intégrale ($\int \omega dt$) est évaluée pour chaque valeur ($\omega$) de la vitesse de rotation au moyen d'une deuxième fonction d'évaluation ($f_2$), et

d) l'équipement de sécurité est déclenché en fonction des résultats des évaluations, effectuées indépendamment les unes des autres, des valeurs différentielles ($d\omega/dt$) et des valeurs de l'intégrale ($\int \omega dt$).

**2.** Procédé selon la revendication 1, dans lequel la valeur ($f_1(\omega)$) de la première fonction d'évaluation (1) est, pour chaque valeur ($\omega$) à évaluer de la vitesse de rotation, comparée à la valeur différentielle ($d\omega/dt$) correspondante, et l'équipement de sécurité est déclenché si la valeur ($f_1(\omega)$) de la fonction d'évaluation ($f_1$) est dépassée par la valeur de l'intégrale ($\int \omega dt$).

**3.** Procédé selon la revendication 1 ou 2, dans lequel la valeur ($f_2(\omega)$) de la deuxième fonction d'évaluation ($f_2$) est, pour chaque valeur ($\omega$) de la vitesse de rotation, comparée à la valeur correspondante de l'intégrale ($\int \omega dt$), et l'équipement de sécurité est déclenché si la valeur ($f_2(\omega)$) de la fonction d'évaluation ($f_2$) est dépassée par la valeur de l'intégrale ($\int \omega dt$).

**4.** Procédé selon une des revendications précédentes, dans lequel

a) pour la formation de valeurs de taux de rotation ($\omega i$), les signaux de capteur ($\omega$) du capteur de taux de rotation (1) sont échantillonnés à des moments de saisie de données ($t_i$) consécutifs, de préférence équidistants, et

b) le quotient différentiel (($\omega_i - \omega_{i-1})/(t_i - t_{i-1}$)) est formé pour respectivement des moments de saisie de données ($t_{i-1}, t_i$) consécutifs en tant que valeur différentielle ($d\omega_i/dt_i$).

**5.** Procédé selon une des revendications 1 à 3, dans lequel

a) pour la formation de données de taux de rotation ($\omega_i$), les signaux de capteur ($\omega$) du capteur de taux de rotation (1) sont échantillonnés à des moments de saisie de données ($t_i$) consécutifs, de préférence équidistants,

b) au moins deux intervalles de temps disjoints ($t_i - t_{i-1}, t_{i-1} - t_{i-2}, t_{i-2} - t_{i-3}$) sont produits avec au moins trois moments de saisie de données consécutifs ($t_{i-3}, t_{i-2}, t_{i-1}, ti$),

c) les quotients différentiels ($\Delta\omega_j, j = 1, 2, 3$) sont formés à partir des valeurs de taux de rotation ($\omega_i - \omega_{i-1}, \omega_{i-2}, \omega_{i-3}$) appartenant aux trois moments de saisie de données consécutifs ($t_{i-3}, t_{i-2}, t_{i-1}, t_i$), et

d) les quotients différentiels ($\Delta\omega_j, j = 1, 2, 3$) sont totalisés pour la formation d'une valeur différentielle ($\omega_k'$) à affecter à une des valeurs de taux de rotation ($\omega_i, \omega_{i-1}, \omega_{i-2}, \omega_{i-3}$) citées.

**6.** Procédé selon la revendication 5, dans lequel

e) au moment de saisie de données ($t_i$), les étapes de procédé b) à d) sont effectuées, la valeur différentielle ($\omega_k'$) calculée selon l'étape de procédé d) est affectée à la valeur détectée ($\omega_i$) du taux de rotation, et

f) l'étape de procédé e) est répétée de façon successive à des moments de saisie de données consécutifs ($t_{i+1}$, $t_{i+2}$, $t_{i+3}$, ...).

7. Procédé selon une des revendications précédentes, dans lequel

   a) pour la formation de données de taux de rotation ($\omega_i$) à des moments de saisie de données ($t_i$) consécutifs, de préférence équidistants, les signaux de capteur ($\omega$) du capteur de taux de rotation (1) sont échantillonnés, et
   b) pour le calcul de l'intégrale ($\int \omega dt$) via les valeurs des données de taux de rotation ($\omega i$) celles-ci sont totalisées.

8. Procédé selon la revendication 7, dans lequel une fonction de réduction R($\int \varphi dt_i$) est calculée pour la réduction de l'intégrale ($\int \varphi dti$).

9. Procédé selon la revendication 8, dans lequel la réduction de l'intégrale (($\int \varphi dt_i$) est effectuée par échelons.

10. Procédé selon la revendication 9, dans lequel la réduction de l'intégrale (($\int \varphi dt_i$) est réduite de x % dans des segments de temps ($\Delta t$), $\Delta t$ se situant dans la plage de 1 à 200 ms et x se situant dans la plage de 10 à 20.

11. Procédé selon une des revendications précédentes, dans lequel la première et la deuxième fonction d'évaluation ($f_1$, $f_2$) représentent respectivement une fonction échelonnée.

12. Procédé selon la revendication 11, dans lequel les fonctions échelonnées ($f_1$, $f_2$) présentent un nombre limité d'échelons en descente monotone.

13. Procédé selon une des revendications précédentes 1 à 10, dans lequel la première et la deuxième fonction d'évaluation ($f_1$, $f_2$) représentent respectivement une fonction linéaire.

14. Procédé selon une des revendications précédentes, dans lequel, outre la première fonction d'évaluation ($f_1$), en tant qu'autre fonction d'évaluation ($sign_1$), le signe des valeurs ($\omega$, $\omega_i$) de la vitesse de rotation et le signe de la valeur différentielle ($d\omega/dt$, $d\omega_i/dt_i$, $\omega_k'$) correspondante sont comparés, et un déclenchement de l'équipement de sécurité est empêché quand les signes sont différents.

15. Procédé selon une des revendications précédentes, dans lequel, outre la deuxième fonction d'évaluation ($f_2$), en tant qu'autre fonction d'évaluation ($sign_2$), le signe des valeurs ($\omega$, $\omega_i$) de la vitesse de rotation et le signe de l'intégrale ($\int \omega dt$, $\int \varphi dt_i$) correspondante sont comparés, et un déclenchement de l'équipement de sécurité est empêché quand les signes sont différents.

16. Procédé selon une des revendications précédentes, dans lequel un capteur d'accélération (2) est prévu pour la saisie de l'accélération verticale ($a_z$) du véhicule automobile.

17. Procédé selon la revendication 16, dans lequel le signal de capteur ($a_z$) délivré par le capteur d'accélération (2) est échantillonné aux moments de saisie de données ($t_i$) pour la production de données d'accélération ($a_i$).

18. Procédé selon la revendication 17, dans lequel les valeurs des données d'accélération ($a_i$) sont comparées à au moins un seuil de stabilité S($a_z$), et un déclenchement de l'équipement de sécurité est empêché quand ce seuil de stabilité S($a_z$) est atteint par les valeurs des données d'accélération ($a_i$).

FIG.1

$f_1(\omega) = \omega'$

2

1

2

1

$\omega$

FIG. 2

$f_2(\omega) = \alpha$

2

1

2

2

1

$\omega$

FIG. 3

FIG. 4

Gyro - X 1

A / D 3

TP3

($\omega_i$)

4

TP1

sign($\omega_i; \alpha$) 6

$\int \omega_i = \alpha$ 7

$f_2(\omega_i)$ 8

12

13

$S_2(a_z)$ S2

Kanal 2

5

A / D

TP2

($a_i$)

Beschleun.- Z 2

sign($\omega_i, \omega_k'$) 9

$\omega_k'$ 10

$f_1(\omega_k^*)$ 11

15

14

$S_1(a_z)$ S1

Kanal 1

16

17

EP 1 028 037 B1

16

FIG. 8

FIG.9

FIG. 5

FIG. 6

| Kanal | | Schwellen | |
|---|---|---|---|
| | | $S_i(\omega)$, i=1;2;3 | $S_i(\dot\omega)$, i=1;2;3 |
| 1 | 11 | 3.2 rad/s | 3 |
| | 12 | 4.0 rad/s | 2 |
| | 13 | 4.8 rad/s | 1 |

FIG.10

| Kanal | | Schwellen, i=1,...,4 | |
|---|---|---|---|
| | | $S_i(\omega)$ | $S_i(\alpha)$ |
| 2 | 21 | 0.1 rad/s | 0.93 rad |
| | 22 | 0.5 rad/s | 0.78 rad |
| | 23 | 1.0 rad/s | 0.59 rad |
| | 24 | 1.5 rad/s | 0.43 rad |

FIG.11

FIG.7

| Kanal | | Schwelle |
|---|---|---|
| | | $S_{1i}(a)$, i=1;2;3 |
| 1 | 11 | 0.8 g |
| | 12 | 1 g |
| | 13 | 1.1 g |

FIG.12

| Kanal | | Schwelle |
|---|---|---|
| | | $S_i(a)$, i=1,...,4 |
| 2 | 21 | 0.4 g |
| | 22 | 0.5 g |
| | 23 | 0.6 g |
| | 24 | 0.6 g |